# EUROPEAN PATENT SPECIFICATION

(11) **EP 1 197 288 B1**
(45) Date of publication and mention of the grant of the patent: **29.03.2006**
(21) Application number: 01308521.2
(22) Date of filing: 05.10.2001
(51) Int. Cl.: B23K 35/28, B23K 35/40, B23K 35/02

(54) **Aluminum metal-core weld wire**
Aluminium Schweisskerndraht
Fil de soudage en aluminium fourré

(30) Priority: 10.10.2000 US 685106; 27.09.2001 US 965142
(43) Date of publication of application: 17.04.2002
(73) Proprietor: ILLINOIS TOOL WORKS INC., Glenview, Cook County, Illinois 60025 (US)
(72) Inventor: Keegan, James M., Troy, Ohio 45373 (US); Jana, Sushil R., Troy, Ohio 45373 (US); Nagarajan, Sundaram, Troy, Ohio 45373 (US)
(74) Representative: Jones, Helen M.M.

(56) References cited:
- EP-A- 0 439 179
- FR-A- 2 764 905
- US-A- 5 124 529
- PATENT ABSTRACTS OF JAPAN vol. 1995, no. 07, 31 August 1995 (1995-08-31) -& JP 07 096396 A (ISUZU MOTORS LTD), 11 April 1995 (1995-04-11)
- PATENT ABSTRACTS OF JAPAN vol. 1995, no. 02, 31 March 1995 (1995-03-31) -& JP 06 304780 A (ISUZU MOTORS LTD), 1 November 1994 (1994-11-01)
- DATABASE WPI Section Ch, Week 8417 Derwent Publications Ltd., London, GB; Class M,Page 23, AN 1984-105259 XP002228970 -& SU 841 184 A (ZHDANOVSKIJ METALL INST), 30 November 1983 (1983-11-30)
- PATENT ABSTRACTS OF JAPAN vol. 003, no. 118 (C-060), 4 October 1979 (1979-10-04) -& JP 54 099763 A (SUMITOMO ELECTRIC IND LTD), 6 August 1979 (1979-08-06)
- PATENT ABSTRACTS OF JAPAN vol. 2000, no. 07, 29 September 2000 (2000-09-29) -& JP 2000 117486 A (NIPPON STEEL WELD PROD &ENG CO LTD; NIPPON PARKERIZING CO LTD), 25 April 2000 (2000-04-25)
- PATENT ABSTRACTS OF JAPAN vol. 018, no. 343 (P-1761), 28 June 1994 (1994-06-28) -& JP 06 083798 A (MATSUSHITA ELECTRIC IND CO LTD), 25 March 1994 (1994-03-25)

## Description

The present invention relates to new and improved aluminum welding wire and more particularly to a metal-core aluminum welding wire which yields a high quality weld bead when used in welding components of aluminum articles.

Aluminum weld wire is conventionally provided as a solid wire that is generally produced by continuously casting round bars which are then heated to a temperature dependent on the alloy and rolled, for example, to 3/8 inch (9 mm) diameter. This rod is then drawn through a series of dies so that its diameter is reduced to the required size.

One of the problems that have been associated with weld deposits formed from aluminum weld wire is porosity. It is important that the weld beads be free of porosity. The porosity observed in aluminum welds has been attributed to a number of sources but one of the most prominent sources is voids caused by the release of hydrogen bubbles from the solidifying weld metal. These bubbles are caused by the introduction of hydrogen containing materials into the weld bead. During the welding, hydrogen-containing materials are decomposed and the hydrogen so produced dissolves in the molten metal. Upon solidification, the lower solubility of the hydrogen in the solid metal results in the rejection of hydrogen from solution and the production of small voids in the weld. It has been reported that hydrogen-containing materials may enter the weld bead from a number of sources but one of the principal sources is the welding wires themselves.

US-A-3,676,309 discloses an aluminum base alloy welding wire, which is coated with an alumina-phosphate coating having a low rate of hydration such that essentially porosity free welds arc obtained. The aluminum welding wire may be prepared by immersing the wire in a first aqueous alkaline solution containing an anode strip., continuously immersing the wire in a second aqueous alkaline solution containing a cathode strip, and passing an electric current through the electrolytes while the wire is immersed therein Thereafter the wire may be rinsed in cold water, immersed in a passivating and neutralizing acid bath, and again rinsed. The second part of the process is an acid electrolytic treatment.

US-A-4,913,927 discloses an aluminum weld wire having an ultra clean aluminum surface, lubricated with a dual coating of an essentially anhydrous lower alkanol and a colloidal solid lubricant.

Japan Patent Publication (OPI) 6-304780-A discloses an aluminum weld wire that is tubular and filled with a flux. According to the publication the flux contains 5-10% sodium, 40-45% potassium, 5% or less oxygen, 5% or less sulfur, 5-10% fluorines, and 35-40% chlorines.

The present invention relates to an aluminum metal-core weld wire for producing aluminum weld deposits as defined in claim 1.

Metal-core weld wires are generally composite tubular metal electrodes having a metal sheath and a core in which the core contains a core composition of various powdered materials. The term "metal-core" is used herein as it is used in the welding wire industry to refer to a core powders with low amounts (less than about 5%) of non-metallic agents that form slag on the weld deposit. For example, see ANSI/ANS A5.9 Specifications for Bare Stainless Steel Welding Electrodes and Rods. In a more particular embodiment of the invention, the aluminum metal-core weld wire comprises an aluminum sheath and a core composition containing less than about 5% non-metallic components based on the weight of the wire. The term "non-metallic" refers to elements that are not metals or metalloids; for example, it refers to hydrogen, carbon, nitrogen, oxygen, phosphorous, sulfur, selenium and the halides. The aluminum metal-core weld wire of the invention is useful for joint and surface welding. Some of the advantages of metal-core weld wire are better penetration into the base metal and better arc transfer characteristics (as compared to solid weld wire). Better arc transfer characteristics include better arc stability, lower spatter and better arc initiation. While steel metal-core weld wire is well known and widely used in the welding industry, aluminum weld wire has not been available commercially as a tubular metal-core wire.

The core composition contains manganese nitride and/or barium. By incorporating barium and/or manganese nitride in the core composition, less porous and in some cases essentially non-porous welds can be formed. Barium is believed to reduce porosity by dissolving hydrogen and thus preventing hydrogen from bubbling out of the weld upon solidification. Manganese nitride is believed to reduce porosity by releasing nitrogen upon welding. The nitrogen purges the hydrogen from the molten weld metal.

In manufacturing metal core wires, the core composition is blended and deposited onto a metal strip that is formed into a tube or sheath about the core composition in a forming mill. The sheath surrounding the core composition is drawn through reducing dies to a specified diameter. In order to perform the drawing operation, it is necessary to lubricate the outside surface of the sheath as it is pulled through the reducing dies. The lubricants that are conventionally used in forming steel tubular wire are organic and contain hydrogen. These lubricants are disadvantageous in forming aluminum metal core wire because the lubricants remain on the surface of the wire and break down during welding and release hydrogen. Unlike steel, molten aluminum has a high solubility for hydrogen. As a result, the released hydrogen readily dissolves in the molten aluminum weld deposit When the weld deposit solidifies, the hydrogen is released and creates pores and channels in the weld rendering the weld unsuitable for most applications. In accordance with one embodiment of the present invention, this manufacturing difficulty is overcome by using an inorganic lubricant in the reducing dies. One lubricant of choice is molybdenum disulfide.

Another embodiment of the invention is a method for manufacturing aluminum metal-core wire as defined in claim 6.

A preferred embodiment of the invention is a method for forming an aluminum tube useful in forming an aluminum metal-core wire wherein the formed sheath is cleaned in a bath of tetrachloroethylene (TCE) and baked at a temperature between about 280-500°F (138-260°C) typically for about 1 to 4 hrs. to remove hydrogen containing materials such as moisture and TCE from the surface of the wire.

The weld wire may be used in a method for forming an aluminum weld which comprises applying a voltage to an aluminum metal-core wire in the vicinity or a work surface to generate an arc which melts the electrode and the work surface and forms the weld.

The aluminum metal core wire of the present invention is formed from an aluminum strip, which is formed into a tube. The aluminum strip that is used in the invention can be formed from aluminum or any of the aluminum alloys that are commercially available. The 4000 and 5000 series aluminum alloys (as classified by The Aluminum Association) are often used to form the strip. Two alloys that are particularly desirable for forming the strip are 5056 and 5052. The later is characterized in that it contains 2.2 to 2.8% Mg and the former is characterized in that it contains 0.05 to 0.2% Mn, 4.5 to 5.6% Mg, and 0.02 to 0.2% Cr. Aluminum strip is available in a number of thicknesses. Strip 0.4 inch (10mm) wide and 0.028 (0.7mm) inch thick has been found to be suitable for use in one embodiment of the invention. In some embodiments of the invention it may be desirable to use thicker strip in order to increase the stiffness of the wire. In these embodiments it may be desirable to use strip about 0.039 inch (1mm) thick. The aluminum strip that is used in one embodiment of the invention ranges from about 0.250 to 0.650 inch (6.35 to 16.5mm) wide and about 0.010 to 0.040 inch (0.25 to lmm) thick.

The composition of the weld wire can be adjusted to provide the weld properties and/or to be compatible with the work piece in a manner that is known in the art. Many of these compositions have been assigned AWS numbers. Two of the most widely used aluminum weld wires are ER 5356 and ER 4043. These weld wires contain at least about 4% and more typically about 4 to 6% magnesium or silicon. In two of the embodiments, the weld wires of the invention are composed such that they meet the specifications for these wires.

In accordance with a more general embodiment of the invention, in addition to aluminum, the aluminum metal core wires of the present invention may contain one or more of the following elements (based on percent by weight of the wire) :

**Table 1**

| | % |
|---|---|
| Si | 0.15 |
| Cu | 0-7.0 |
| Mn | 0-1.5 |
| Mg | 0-5.5 |
| Ti | 0-10 |
| Ba | 0-0.5 |

**¹Table 2**

| | ER 4043 | ER 5356 |
|---|---|---|
| Si | 4.5-6.0 | 0.25 max |
| Fe | 0.8 max | 0.4 max |
| Cu | 0.3 max | 0.1 max |
| Mn | 0.15 max | 0.05-0.20 |
| Mg | 0.1 | 4.5-5.5 |
| Cr | - | 0.05-0.20 |
| Ti | 0.2 max | 0.06-0.20 |

| | | |
|---|---|---|
| ¹A number followed by the term "max" refers to the maximum permitted level of an impurity | | |

In addition to the metals shown in Tables 1 and 2, in accordance with industry standards, the wire may contain limited amounts of Zn, V, Be, Sn, Si, Fe, Zr. Generally, these metals will not exceed 0.005 to 0.45%. As industry standards change and/or new standards are adopted, the compositions of the weld, the wire, the sheath and the core composition are easily adjusted to accommodate them.

Barium and manganese nitride are used alone or in combination in an amount sufficient to provide a weld that is essentially non-porous. Manganese nitride can be used in an amount up to about 6% of the core composition and is usually used in an amount of about 1 to 6%. Barium can be used in an amount up to about 15% of the core and is usually used in an amount of about 0.1 to 15%. Barium is preferably added to the core as CalSiBar in an amount up to 10% by weight of the core and usually in an amount of about 1 to 10%.

The sheath composition useful in select embodiments of the invention, in addition to aluminum may contain one or more of the following elements in the weight percent (based on the sheath), illustrated in Table 3:

**Table 3**

| | General | Typical |
|---|---|---|
| Si | 0-16.00 | 0-11 |
| Fe | 0-1.10 | 0-0.8 |
| Cu | 0-0.71 | 0-0.5 |
| Mn | 0-0.71 | 0.5 |
| Mg | 0-7.10 | 0-5.0 |
| Cr | 0-0.50 | 0-0.35 |
| Zn | 0-0.40 | 0-0.25 |
| Ti | 0-0.40 | 0-0.30 |

In the embodiments of the invention in which a core composition is used in the wire, the core composition can be adjusted, based on the sheath alloy composition, to provide a wire which meets the desired weld characteristics and more particularly meets one of the American Welding Society (AWS) classifications for aluminum electrodes and wires as published in AWS A5.10. The core composition in weight % is illustrated in Table 4 (the "typical" formulations reflect AWS standards):

**Table 4 Powder Core Composition**

| | General | Typical |
|---|---|---|
| Al powder | 0-100.00 | 75-95.00 |
| Si | 0-4.0 | 0-4.0 |
| Ca | 0-2.0 | 0-2.0 |
| Mn | 0-6.0 | 0-1.60 |
| Zr | 0-2.5 - | 0-1.00 |
| Cr | 0-3.33 | 0-.40 |
| Ti | 0-10 | 0-3.00 |
| Ba | 0-1.5 | 0-1.5 |

The core composition may be prepared using K₃A1F₆. Ca-Si, Mn-N, Zr-Si and/or CalSiBar alloys. These alloys have the compositions shown in Table 5 below:

**Table 5 Alloy Compositions (%)**

| Alloy | Ca | Si | Fe | N | S | O | Mn | Zr | C | Al | Ba |
|---|---|---|---|---|---|---|---|---|---|---|---|
| Ca-Si | 31.5 | 62.5 | 5.5 | 0 | 0 | 0 | 0 | 0 | 0.50 | 0 | 0 |
| Mn-N | 0 | 0 | 0 | 6.00 | .30 | .50 | Bal | 0 | 0 | 0 | 0 |
| Zr-Si | 0 | 50.8 | 10.3 | 0 | 0 | 0 | 0 | 38.4 | 0.50 | 0 | 0 |
| Cal SiBar | 17.1 | 57.6 | 8.16 | 0 | 0.39 | 0 | 0 | 0 | 0.50 | 1.06 | 15.5 |

The core composition generally constitutes about 6 to 25% total weight of the aluminum core wire and more typically about 7 to 9%. In some of the more typical embodiments of the invention, the powders and particles making up the core composition will have an average particle size of about 45 micron to 250 micron. Uniform distribution of the core composition in the drawn aluminum wire affords uniformity of the weld deposit.

Aluminum core wire can be manufactured using wire manufacturing equipment and conditions similar to those used in the manufacture of conventional metal core wire. Aluminum strip is drawn through forming rolls. The rolls typically include 3 pairs of rolls having a forming groove therein which roll the strip into a "U" shaped tube. The tube is filled with the metal powder and formed to create a wire. The closing rolls typically have the following diameter sequence: 0.160 inch 0.150 inch 0.140 inch and 0.130 inch (4.0mm; 3.8mm; 3.6mm; and 3.3mm) . The strip must be lubricated as it is moved through this forming die set but because so little of this lubricant remains on the surface of the wire after the downstream drawing operation, this lubricant can be a conventional lubricant such as a silicone oil like Dow Corning 200. The strip is generally run through the forming rolls at a rate of about 40 to 200 feet per minute (13 to 65 m/m) and more typically at a rate of 44 fpm (14 m/m) .

Downstream from the forming die, the strip is drawn through a series of reducing dies, typically about 7 to 8 dies which progressively become smaller in diameter from an initial diameter of about 0.146 inch (3.7mm) to a final diameter of about 0.062 inch (1.57mm). In one case, these dies by diameter (inch) have the sequence: 0.146, 0.120, 0.109, 0.097, 0.082, 0.069, and 0.062 and in mm the sequence 3.7; 3.0; 2.8; 2.5; 2.0; 1.75 and 1.6mm. As the strip is drawn through the reducing dies it is lubricated with a hydrogen-free lubricant. In one embodiment of the invention the lubricant is molybdenum disulfide. In another embodiment it is tungsten disulfide. The rolled strip is generally drawn through the reducing dies at a rate of about 100 to 1000 feet per minute (32 to 320 m/m).

The invention will be illustrated in more detail by the following non-limiting examples:
Examples. Aluminum metal core weld wires were prepared using a 5056 aluminum alloy to form the sheath and the following core compositions:

**Table 6**

| | | | | | |
|---|---|---|---|---|---|
| Ex. No. | 1 | 2 | 3 | 4 | 5 |
| Al powder | 78.00 | 87.00 | 80.00 | 92.00 | 77.00 |
| Ca/Si alloy | 2.00 | 0.00 | 2.00 | 2.00 | 0.00 |
| Ti | 10.00 | 2.00 | 10.00 | 3.00 | 10.0 |
| Mn-N alloy | 6.00 | 6.00 | 6.00 | 1.60 | 6.0 |
| Zr/Si alloy | 1.00 | 1.00 | 1.00 | 1.00 | 1.00 |
| Cr | 1.00 | 1.00 | 1.00 | .40 | 0.00 |
| Silicon | 0.00 | 1.00 | 0.00 | 0.00 | 0.00 |
| KA1F | 2.00 | 2.00 | 0.00 | 0.00 | 0.00 |
| Mn | 0.00 | 0.00 | 0.00 | 0.00 | 0.00 |
| Ba/Si | 0.00 | 0.00 | 0.00 | 0.00 | 6.00 |
| Total | 100.00 | 100.00 | 100.00 | 100.00 | 100.00 |

The best weldability with minimum porosity was obtained with Examples 4 and 5. Examples 1-2 exhibited some porosity. Example 3 exhibited no porosity.

## Claims

1. An aluminium metal-core weld wire for producing aluminium weld deposits, the weld wire comrising a sheath and a core, the sheath being aluminium or aluminium alloy and the core being a powder composition having the following composition in weight per cent
| | |
|---|---|
| Al | 75-95% |
| Si | 0-4.0% |
| Ca | 0-2.0% |
| Mn | 0-6.0% |
| Zr | 0-2.5% |
| Cr | 0-3.33% |
| Ti | 0-10% |
| Ba | 0-1.5% |
and wherein the one composition contains either
a) a powder of a barium containing alloy in an amount such that the Ba is present in the core in an amount of at least 0.1% by weight; based on the come composition or
b) MnN in an amount of1 to 6% by weight of the core.

2. The aluminum weld of claim 1, wherein the elements in the core composition form part of a metal alloy powder selected from K₃AlF₆, Ca-Si, Mn-N, Zr-Si and/or CalSiBar which have the compositions shown below
| Alloy | Ca | Si | Fe | N | S | O | Mn | Zr | C | Al | Ba |
|---|---|---|---|---|---|---|---|---|---|---|---|
| Ca-Si | 31.5 | 62.5 | 5.5 | 0 | 0 | 0 | 0 | 0 | 0.50 | 0 | 0 |
| Mn-N | 0 | 0 | 0 | 6.00 | .30 | .50 | Bal | 0 | 0 | 0 | 0 |
| Zr-Si | 0 | 50.8 | 10.3 | 0 | 0 | 0 | 0 | 38.4 | 0.50 | 0 | 0 |
| Cal SiBar | 17.1 | 57.6 | 8.16 | 0 | 0.39 | 0 | 0 | 0 | 0.50 | 1.06 | 15.5 |

3. An aluminum weld wire according to claim 1 to 2, wherein the sheath is formed from a 4000 or 5000 series aluminum alloy preferably a 5052 or 5056 aluminum alloy.

4. An aluminum weld wire according to any one of the preceding claims, wherein the core composition contains barium in the form of a powder of BaSi or Cal SiBar.

5. An aluminum weld wire according to any one of claims 1 to 3, wherein the core composition contains MnN

6. A method for manufacturing aluminum metal-core wire of claim 1 which comprises depositing the core composition onto a strip of aluminum, forming the strip of aluminum into a tube which contains the core composition, applying an inorganic lubricant to the surface of the tube, and drawing the tube through a plurality of reducing dies.

7. A method according to claim 10, wherein the method includes the additional step of cleaning the surface of the tube with tetrachloroethylene and/or the additional step of drying the tube.

8. A method according to claim 6 or 7, wherein the lubricant is molybdenum disulfide.

## Patentansprüche

1. Aluminium-Metallkern-Schweißdraht zur Erzeugung von Aluminium-Schweißgut, wobei der Schweißdraht eine Umhüllung und einen Kern aufweist, wobei die Umhüllung Aluminium oder eine Aluminiumlegierung ist und der Kern eine Pulverzusammensetzung mit der folgenden Zusammensetzung in Gewichtsprozent ist:
Al 75 - 95 %
Si 0 - 4,0 %
Ca 0 - 2,0 %
Mn 0 - 6,0 %
Zr 0 - 2,5 %
Cr 0 - 3,33 %
Ti 0 - 10 %
Ba 0 - 1,5 %
und wobei die Kern-Zusammensetzung entweder
a) ein Pulver aus einer Barium-haltigen Legierung in einer solchen Menge, dass das Ba im Kern in einer Menge von mindestens 0,1 Gewichts-% basierend auf der Kernzusammensetzung vorhanden ist; oder
b) MnN in einer Menge von 1 bis 6 Gewichts-% des Kerns enthält.

2. Aluminium-Schweißdraht nach Anspruch 1, wobei die Elemente in der Kernzusammensetzung einen Teil eines Metalllegierungspulvers bilden, das ausgewählt ist aus K₃AlF₆, Ca-Si, Mn-N, Zr-Si und/oder CalSiBar, welche die unten angegebenen Zusammensetzungen aufweisen:
| Legierung | Ca | Si | Fe | N | S | O | Mn | Zr | C | Al | Ba |
|---|---|---|---|---|---|---|---|---|---|---|---|
| Ca-Si | 31,5 | 62,5 | 5,5 | 0 | 0 | 0 | 0 | 0 | 0,50 | 0 | 0 |
| Mn-N | 0 | 0 | 0 | 6,0 | 0,30 | 0,50 | Bal | 0 | 0 | 0 | 0 |
| Zr-Si | 0 | 50,8 | 10,3 | 0 | 0 | 0 | 0 | 38,4 | 0,50 | 0 | 0 |
| Cal SiBar | 17,1 | 57,6 | 8,16 | 0 | 0,39 | 0 | 0 | 0 | 0,50 | 1,06 | 15,5 |

3. Aluminium-Schweißdraht nach Anspruch 1 oder 2, wobei die Umhüllung aus einer Aluminiumlegierung der 4000er- oder 5000er-Reihe gebildet ist, vorzugsweise einer 5052- oder 5056-Aluminiumlegierung.

4. Aluminium-Schweißdraht nach irgendeinem der vorhergehenden Ansprüche, wobei die Kernzusammensetzung Barium in der Form eines Pulvers aus BaSi oder Cal Sibar enthält.

5. Aluminium-Schweißdraht nach irgendeinem der Ansprüche 1 bis 3, wobei die Kernzusammensetzung MnN enthält.

6. Verfahren zur Herstellung eines Aluminium-Metallkerndrahtes nach Anspruch 1, welches das Ablagern der Kernzusammensetzung auf einem Aluminiumstreifen, das Formen des Aluminiumstreifens zu einem Rohr, welches die Kernzusammensetzung enthält, Aufbringen eines anorganischen Schmiermittels auf die Oberfläche des Rohres und Ziehen des Rohres durch eine Vielzahl von Reduziergesenken aufweist.

7. Verfahren nach Anspruch 6, wobei das Verfahren den zusätzlichen Schritt des Reinigens der Oberfläche des Rohres mit Tetrachlorethylen und/oder den zusätzlichen Schritt des Trocknens des Rohres aufweist.

8. Verfahren nach Anspruch 6 oder 7, wobei das Schmiermittel Molybdändisulfid ist.

## Revendications

1. Fil de soudage en aluminium à âme métallique pour produire des dépôts de soudage en aluminium, le fil de soudage comprenant une gaine et une âme, la gaine étant en aluminium ou en alliage d'aluminium et l'âme étant une composition poudreuse ayant la composition suivante selon un pourcentage en poids :
| | |
|---|---|
| Al | 75-95% |
| Si | 0-4,0% |
| Ca | 0-2,0% |
| Mn | 0-6,0% |
| Zr | 0-2,5% |
| Cr | 0-3,33% |
| Ti | 0-10% |
| Ba | 0-1,5% |
et dans lequel cette composition contient soit :
a) une poudre d'un alliage contenant du baryum selon une quantité telle que Ba est présent dans l'âme selon une quantité d'au moins 0,1% en poids, sur la base de la composition de l'âme ; soit
b) MnN selon une quantité de 1 à 6% en poids de l'âme.

2. Fil de soudage en aluminium selon la revendication 1, dans lequel les éléments dans la composition de l'âme font partie d'une poudre d'un alliage métallique sélectionné dans le groupe K3AlF6, Ca-Si, Mn-N, Zr-Si et/ou CalSiBar qui ont la composition présentée ci-dessous :
| Alliag e | Ca | Si | Fe | N | S | 0 | Mn | Zr | C | Al | Ba |
|---|---|---|---|---|---|---|---|---|---|---|---|
| Ca-Si | 31,5 | 62,5 | 5,5 | 0 | 0 | 0 | 0 | 0 | 0,50 | 0 | 0 |
| Mn-N | 0 | 0 | 0 | 6,00 | 0,30 | 0,50 | Bal | 0 | 0 | 0 | 0 |
| Zr-Si | 0 | 50,8 | 10,3 | 0 | 0 | 0 | 0 | 38,4 | 0,50 | 0 | 0 |
| Cal SiBar | 17,1 | 57,6 | 8,16 | 0 | 0,39 | 0 | 0 | 0 | 0,5 0 | 1,06 | 15,5 |

3. Fil de soudage en aluminium selon la revendication 1 ou 2, dans lequel la gaine est formée d'un alliage en aluminium des séries 4000 ou 5000, de préférence un alliage en aluminium des séries 5052 ou 5056.

4. Fil de soudage en aluminium selon l'une quelconque des revendications précédentes, dans lequel la composition de l'âme contient du baryum sous la forme d'une poudre de BaSi ou Cal SiBar.

5. Fil de soudage en aluminium selon l'une quelconque des revendications 1 à 3, dans lequel la composition de l'âme contient MnN.

6. Procédé de fabrication d'un fil en aluminium à âme métallique selon la revendication 1, qui comprend le dépôt de la composition de l'âme sur une bande d'aluminium, la formation de la bande d'aluminium en un tube qui contient la composition de l'âme, l'application d'un lubrifiant inorganique à la surface du tube, et l'étirement du tube à travers une pluralité de filières de réduction.

7. Procédé selon la revendication 10, dans lequel le procédé comprend l'étape supplémentaire de nettoyage de la surface du tube avec du tétrachloroéthylène et/ou l'étape supplémentaire de séchage du tube.

8. Procédé selon la revendication 6 ou 7, dans lequel le lubrifiant est le bisulfure de molybdène.
